Europäisches Patentamt

European Patent Office

Office européen des brevets

(19)

(11) Publication number: **0 252 020**
**A2**

(12) **EUROPEAN PATENT APPLICATION**

(21) Application number: 87830198.5

(22) Date of filing: 26.05.87

(51) Int. Cl.⁴: **H 01 S 3/082**
H 01 S 3/098, H 01 S 3/113

(30) Priority: 28.05.86 IT 4807886

(43) Date of publication of application:
07.01.88 Bulletin 88/01

(84) Designated Contracting States: DE FR GB NL SE

(71) Applicant: SELENIA INDUSTRIE ELETTRONICHE
ASSOCIATE S.p.A.
Via Tiburtina, KM 12.400
I-00131 Roma (IT)

(72) Inventor: De Maria, Michele
Via Carcaricola, 138
I-00133 Roma (IT)

Giuliani, Giampiero
Via Padova, 65
I-00100 Roma (IT)

Benedetti Michelangeli, Glauco
Viale dei Frassini, 34
I-00040 Ariccia (IT)

Palange, Elia
Via Colli della Serpentara, 15/11
I-00139 Roma (IT)

(74) Representative: Emiliani, Gabriele, Ing.
c/o ITALPATENT Via Agri, 3
I-00198 Roma (IT)

The title of the invention has been amended (Guidelines for Examination in the EPO, A-III, 7.3).

(54) **Multipassage optical configuration for a laser employing a saturable absorber.**

(57) The invention regards the multipassage of laser radiation (19) through the same saturable absorber (15), located within a high power laser optical cavity operating through the same saturable absorber which operates in presence of Q switch or Mode locking. Through multiple passages (Figure 1) within the Saturable Absorber it has been demonstrated that very high energy laser pulses and conversion efficiency can be achieved, previously obtainable only through Q switching electronic systems.

Fig. 1

EP 0 252 020 A2

# Description

## OPTICAL CONFIGURATION FOR MULTI PASSAGE OF LASER RADIATION THROUGH THE SAME SATURABLE ABSORBER, LOCATED WITHIN A HIGH POWER LASER OPTICAL CAVITY WHICH OPERATES THROUGH THE SAME SATURABLE ABSORBER IN PRESENCE OF Q SWITCH OR MODE LOCKING.

The invention takes regard for an optical system for multipassage of laser radiation through one same saturable absorber, set within a high power laser optical cavity operating through the same saturable absorber, in Q switch or locking modes.

This invention finds its preferred application within solid state operating at high pulse rates and peak power levels in Q switch and locking modes through use of saturable absorbers.

The problem which we seek to solve with the invention presented is that of increasing laser peak and average power and conversion efficiency by adopting optical configurations which allow laser radiation multipassage through the same saturable absorber, for each complete cycle of the laser radiation within the optical resonator.

Till now, traditional configurations had their saturable absorber cell at a point of the laser cavity whereby the cell was crossed only twice per laser radiation full cycle within the optical resonator.

The invention will now be described with reference to one of its presently preferred implementations presented as an illustration only, without being limited to this, with reference to the table and drawings enclosed.

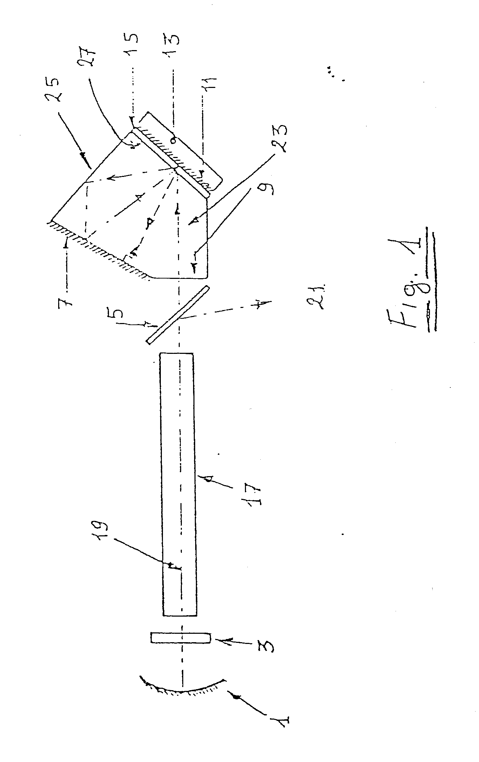

Figure 1 shows the laser cavity where:
(1) is the totally reflecting mirror
(3) is the >/4 (quarter wave) vane suitably oriented
(17) laser active media (Nd/YAG);
(5) dielectric layer polarizer;
(21) laser radiation output;
(23) fuzed quartz prism;
(9) optically honed and antireflection treated surface;
(19) resonator optical axis coincident with the laser beam;
(7) optically honed and treated surface to obtain total reflection at the laser radiation incident angles;
(25) and (27) optically honed surfaces;
(15) saturable absorber foil in a plastic matrix;
(13) sapphire lamination;
(11) optically honed sapphire surface treated for total reflectivity at the laser beam incident angles;

The multipassage configuration presented by this invention consists of the following:

(a) a fuzed quartz prism (23) having the dimensions of a few centimeters having surfaces (7), (9) and (25) flat and optically honed. Surface (9) is antireflective for laser radiation normal incidence angles, while (7) is treated for total reflectivity at laser radiation incidence angles;

(b) a plastic absorber lamination (15);

(c) a sapphire lamination (13) with surface (11) treated for total reflectivity at the laser radiation incidence angles.

La mination (15) is glued between surface (27) of the prism and surface (11) of the sapphire lamination (13) which in turn may be placed in thermal contact with a heat sink.

The invention in question is now described with reference to figure 1. The light radiation (19) coming from mirror (1) crosses the quarter wave lamination (3) suitably oriented, and is then amplified by active means (17) and then strikes polarizer (5) where it splits into two parts. Part (21) is the useful beam, the other, through an antireflection treated surface (9), enters prism (23), reflects on totally reflecting surface (11) of the sapphire lamination (13), crossing twice absorber (15), then, having been totally reflected by surfaces (25) and (7), again strikes surface (7), working its way back, through the optical path described above, to mirror (1).

The main features of the invention are that the cavity laser beam crosses at each completion of the optical path, n times, (with n>2), the same partial area of one same saturable absorber, so as to obtain the initial inversion of the active means with saturable absorber which has an n times lower optical density. This way the saturable absorber residual absorption may be lowered, so as to achieved higher output power levels, greater laser conversion efficiencies and lastly, lesser heating of the saturable absorber itself, resulting in lesser damage at high average power.

## Claims

1. Laser radiation multipassage optical configuration, characterized by a saturable absorber set in the laser optical cavity operating as a saturable absorber in Q switch or Locking Modes.

2. Multipassage optical configuration as per claim 1, where such configuration, at each complete round of the laser cavity, gives way to n (n>2) crossings of the laser beam through the same area of the same saturable absorber set at any point of the laser cavity in subject, whichever be the optical configuration used to achieve n crossings with n>2.

3. Optical configuration as per claims above, where the saturable absorber, through which the laser operates in Q switch or Locking mode, is set between two parallel mirrors, giving way to an interferometer which has a saturable absorption within the laser cavity.

Fig. 1